# NEW EUROPEAN PATENT SPECIFICATION

(11) **EP 1 382 502 B2**
(45) Date of publication and mention of the opposition decision: **31.12.2008**
(45) Mention of the grant of the patent: 06.04.2005
(21) Application number: 03016311.7
(22) Date of filing: 18.07.2003
(51) Int. Cl.: B60T 7/08, B60T 13/66

(54) **Method and braking system for the parking brake of vehicles, in particular lorries**
Verfahren und Bremsvorrichtung zur Feststell-Bremsung von Fahrzeugen, insbesondere Lastwagen
Procédé et système de freinage pour l'actionnement du frein de serrage des véhicules, notamment des camions

(30) Priority: 20.07.2002 DE 10233018
(43) Date of publication of application: 21.01.2004
(73) Proprietor: IVECO MAGIRUS AG, D-89079 Ulm (DE)
(72) Inventor: Stürner, Johann, 89079 Ulm (DE); Baur, Franz, 88480 Achstetten (DE)
(74) Representative: Gervasi, Gemma

(56) References cited:
- DE-A- 3 544 356
- DE-A1- 3 224 397
- DE-B- 1 287 956
- US-A- 4 824 178
- US-A- 5 520 446
- US-B1- 6 290 309
- 'Druckschriftennummer WABCO 815000016.3' WABCO TRAINING PRÜFLEHRGANG 1 01 October 1992, pages 11/1 - 11/6
- 'FUNKTIONSPLAN BREMSE 81.99131.0371 DER MAN NUTZFAHRZEUGE AG' 05 November 1993,

## Description

The invention relates to a braking system for vehicles, in particular lorries, having a service brake and an air-pressure controlled spring-actuated parking brake, a parking brake actuating device and also a relay valve for ventilating and venting the spring-actuated parking brake in the event of parking braking.

The service brake may be an air brake or a hydraulic brake. The following description will relate predominantly to air service brakes.

In vehicles having air brake systems the parking brake mostly takes the form of a spring-actuated brake. This spring-actuated brake passes into the braking position when the air pressure, which during vehicle operation counteracts the spring force of the spring-actuated brake, is discharged. In this way it is ensured that the vehicle is retarded and brought to a halt by the parking brake in the event of a failure or drop in air pressure.

DE 35 44 356 A1 concerns the problem in connection with trailer vehicles that when using spring-actuated brakes they can assume the braking position when the air pressure in the braking system is too low for one or other reason. According to the aforementioned published specification, considerable air loss is to be expected during ABS control, so that in this case the spring-actuated brake is protected from venting by a check valve.

In vehicles which make frequent stops after short journeys, for example refuse collection vehicles, the repeated releasing of the spring-actuated parking brake at short intervals requires a very large compressed air volume so that the air pressure in the compressed air tank drops and, in certain circumstances, the parking brake can only be released after a sufficient air pressure buffer has built up. Further travel is not possible as long as the parking brake is engaged.

This means undesirable waiting times and additional fuel consumption for the constant operation of the compressor of the air brake system. In addition, noise pollution as a result of the high engine speed and premature wear of the wheel brake, compressor, dehumidifier and engine assemblies occur.

The invention is based on the object of devising a braking system of the above-mentioned type, which make possible a reduction in compressed air consumption during the operation of the braking system.

According to the invention, this object is achieved by a braking system as described in claim 1.

When a vehicle is brought to a halt, the brake pressure is maintained in the service brake so that the latter can take over the function of a parking brake. As a rule, therefore, is not necessary to vent and thus engage the spring-actuated parking brake for additional parking braking during a brief halt. The release air pressure can thus be maintained in the spring-actuated brake so that it does not have be built up again when starting the vehicle. A considerable saving of compressed air volume is achieved thereby. It is merely necessary to monitor the brake pressure of the service brake and only when it drops below a predetermined value carry out venting of the spring-actuated brake so that the latter can take over the parking brake function.

A braking system of the above-mentioned type is characterised in that the relay valve is designed so that it only vents the spring-actuated parking brake during parking braking when the brake pressure in the service brake drops below a pressure sufficient to arrest the vehicle.

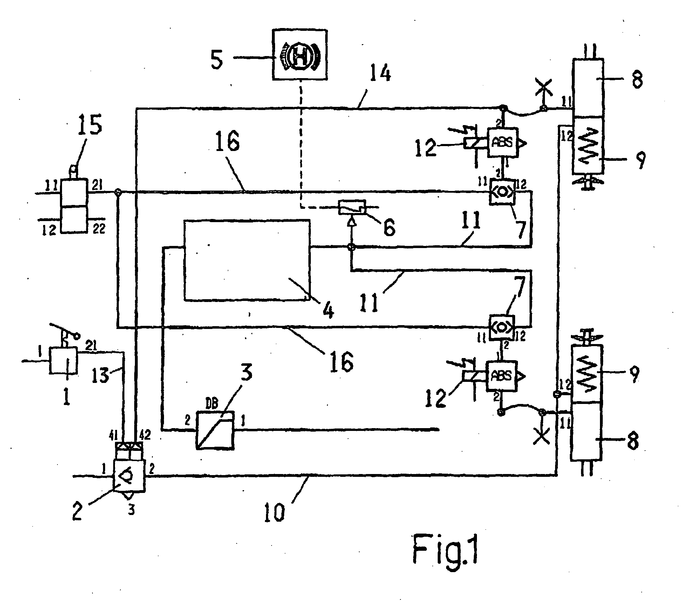

Preferred examples of embodiment of the invention will be illustrated below with reference to the accompanying drawing.

The single Figure is a simplified circuit diagram of a braking system according to the invention with a service brake and a spring-actuated parking brake.

In the circuit diagram the reference numeral 1 denotes a handbrake valve. The reference numeral 2 denotes a overload-protection relay valve and reference numeral 3 a pressure-limiting valve. The reference numeral 4 denotes an actuating device of the service brake of the vehicle, reference numeral 5 an indicator light and reference numeral 6 a pressure switch for operating on the indicator light. The reference numeral 7 denotes a 3/2-way valve, reference numeral 8 a brake cylinder of the service brake and the reference numeral 9 a spring-actuated brake.

10 denotes a line between the overload-protection relay valve 2 and the two spring-actuated brakes 9, via which line these latter can be ventilated and vented. Reference numeral 11 denotes a line between the actuating device 4 and the brake cylinders 8. An ABS solenoid valve 12 is connected via the 3/2-way valve 7 to the line 11. A service brake valve is designated 15. Two lines 16 connect the latter to the respective other input of the 3/2-way valves 7.

The overload-protection relay valve 2 is connected via the line 13 to the handbrake valve 1 and via a line 14 to the service brake system, i.e. to the line 11 of one wheel via one of the 3/2-way valves 7. Therefore, via the line 14 the overload-protection relay valve 2 detects the brake pressure in the two brake cylinders 8.

In the following the function of the braking system will be described in context. The drawing shows an arrangement for two braked wheels, e.g. those of the rear axle. Therefore, some of the components under consideration, for example the brake cylinders 8 and the spring-actuated brakes 9, are provided in duplicate.

By means of the actuating device 4 or the service brake valve 15 the service brake is actuated via the two lines 11 or 16 and the two 3/2-way valves 7 and also the brake cylinders 8 so as to arrest the vehicle. During this braking operation an antilock function is ensured by the ABS solenoid valve 12 but this lies outside the present invention.

The actuation of the service brake also remains active while the vehicle is at rest. Operation during activation by the actuating device 4 is indicated via the pressure switch 6 and the indicator light 5. During normal service braking the indicator light 5 does not illuminate, as will be explained. The brake pressure in the service brake system is determined via the pressure-limiting valve 3 so that the braking forces required by legislation for the parking brake are attained.

According to current regulations it is necessary on safety grounds for the parking brake to be applied when a vehicle is left. In the present case this is carried out by actuating the handbrake valve 1.

In normal use, for parking braking, the spring-actuated brake cylinders 9 are completely vented so that the spring force engages the parking brake.

However, at least during a brief halt, this is not necessary per se, since a more than adequate braking action is achieved via the service brake. Therefore, according to the invention, the normal relay valve is replaced by the overload-protection relay valve 2.

This valve 2 is controlled via the handbrake valve 1 and the line 13, on the one hand, and by the service brake via the 3/2-way valve 7 and the line 14. The overload-protection relay valve 2 is designed so that it discharges if needed be partly or not at all the air pressure via the connection 2 and the line 10 as a function of the brake pressure in the brake cylinders in the spring-actuated cylinders 9.

Only if a leak occurs in the service brake, which is indicated by the pressure drop at the connection 42 of the overload-protection relay valve 2, is the spring-actuated cylinder 9 completely vented and the spring-actuated brake is engaged. Therefore, the vehicle is safeguarded.

The pressure limiting and the maintaining of the pressure in the brake cylinder upon alternative actuation via the service brake valve 15 is not illustrated. It can be effected via valves in hydraulic or pneumatic systems.

In electric or electronic braking systems the pressure limiting and pressure conservation can be effected via other elements, e.g. via switches, potentiometers or software.

If the vehicle has travelled further, firstly the handbrake is released via the handbrake valve 1. Only then are the brake cylinders 8 of the service brake vented by the actuating device 4 or the service brake valve 15.

However, according to the present invention, this does not mean that the spring-actuated cylinders 9 have to be completely replenished. Depending on the brake pressure in the brake cylinders 8, if need be it is necessary to compensate for a differential pressure. It is thereby possible to save a large volume of compressed air.

The invention assumes that the brake pressure in the brake cylinders 8 is maintained during the parking braking and is reduced when the vehicle starts off again. This can take place in different ways, for example via the actuating device 4 in conjunction with a suitable control means.

In hydraulic or pneumatic systems the brake pressure in the brake cylinders 8 is blocked via an additional valve which is opened only upon releasing the parking braking. In electric/electronic braking systems the actuation of the brake is effected by the foot pedal via electric impulses, for example via solenoid valves. The venting can be effected as desired. For example, the pressure can be vented when accelerator pedal is actuated, i.e. when the vehicle is to be put into operation. In this respect many different embodiments are possible.

## Claims

1. A braking system for vehicles, in particular lorries, having a service brake and an air-pressure controlled spring-actuated parking brake, a parking brake actuating device (1), a service brake valve (15), and also a relay valve (2) for ventilating and venting the spring-actuated parking brake in the event of parking braking,
**characterised in that**
- the system further comprises an additional actuation device (4) of the service brake;
- the service brake is operated by the service brake valve (15) or the additional actuation device (4);
- the relay valve (2) is designed so that it only vents the spring-actuated parking brake during parking braking when the brake pressure in the service brake drops below a pressure sufficient to arrest the vehicle.

## Patentansprüche

1. Bremssystem für Fahrzeuge, insbesondere für Lastkraftwagen, welches eine Betriebsbremse und eine druckluftgesteuerte Federdruck-Feststellbremse, eine die Feststellbremse betätigende Vorrichtung (1), ein Betriebsbremsventil (15) und auch ein Relaisventil (2) zum Belüften und Entlüften der Federdruck-Feststellbremse im Fall der Betätigung der Feststellbremse enthält,
**dadurch gekennzeichnet, dass**
- dieses System ferner eine zusätzliche Betätigungsvorrichtung (4) der Betriebsbremse umfasst;
- die Betriebsbremse durch das Betriebsbremsventil (15) oder die zusätzliche Betätigungsvorrichtung (4) betätigt wird,
- das Relaisventil (2) dergestalt ausgelegt ist, dass es die Federdruck-Feststellbremse nur während der Betätigung der Feststellbremse belüftet, wenn der Bremsdruck in der Betriebsbremse unter einen Druckwert fällt, welcher ausreicht, um das Fahrzeug im Stand zu verharren.

## Revendications

1. Système de freinage pour des véhicules, en particulier des camions, comportant un frein de service et un frein de stationnement actionné par ressort, commandé par pression d'air, un dispositif d'actionnement (1) du frein de stationnement, une valve de frein de service (15) et également une valve relais (2) pour la ventilation et l'aération du frein de stationnement actionné par ressort dans le cas du freinage de stationnement, **caractérisé en ce que**
- le système comprend en outre un dispositif d'actionnement additionnel (4) du frein de service;
- le frein de service est actionné par la valve de frein de service (15) ou le dispositif d'actionnement additionnel (4);
- la valve relais (2) est conçue de façon qu'elle aére seulement le frein de stationnement actionné par ressort pendant le freinage de stationnement lorsque la pression de freinage dans le frein de service chute en dessous d'une pression suffisante pour arrêter le véhicule.
